# EUROPÄISCHE PATENTSCHRIFT

(11) **EP 3 110 634 B1**
(45) Veröffentlichungstag und Bekanntmachung des Hinweises auf die Patenterteilung: **24.10.2018**
(21) Anmeldenummer: 15700115.7
(22) Anmeldetag: 09.01.2015
(51) Int. Cl.: B60C 11/03, B60C 11/12

(54) **FAHRZEUGLUFTREIFEN**
VEHICLE TYRE
PNEUMATIQUE DE VÉHICULE

(30) Priorität: 27.02.2014 DE 102014203546
(43) Veröffentlichungstag der Anmeldung: 04.01.2017
(73) Patentinhaber: Continental Reifen Deutschland GmbH, 30165 Hannover (DE)
(72) Erfinder: SENG, Matthias, 30453 Hannover (DE); WIESE, Klaus, 30559 Hannover (DE)
(74) Vertreter: Finger, Karsten
(86) Internationale Anmeldenummer: PCT/EP2015/050291
(87) Internationale Veröffentlichungsnummer: WO 2015/128106

(56) Entgegenhaltungen:
- WO-A1-2008/068216
- DE-A1- 1 920 216
- DE-A1-102012 104 403
- JP-A- 2005 329 793

## Beschreibung

Die Erfindung betrifft einen Fahrzeugluftreifen, insbesondere für einen Einsatz unter winterlichen Fahrbedingungen, mit einem Laufstreifen mit durch in Umfangsrichtung umlaufende Nuten, durch Quernuten und dergleichen voneinander getrennten Profilpositiven, beispielsweise Profilblöcken oder Laufstreifenbändern, in welchen im Wesentlichen in axialer Richtung verlaufende, die Profilpositive durchquerende, von zwei Einschnittwänden begrenzte Einschnitte geringer Breite ausgebildet sind, welche Einschnitte jeweils eine Tiefe von mindestens 70 % der Profiltiefe aufweisen, wobei im Einschnittinneren zumindest eine der Einschnittwände zumindest eine Vertiefung aufweist, welche das Wasseraufnahmevermögen des Einschnittes erhöht.

Beim Einsatz von Reifen unter winterlichen Straßenverhältnissen, insbesondere auf eisbedeckten Fahrbahnen, wird durch die Reibenergie zwischen dem Laufstreifen des Reifens und dem Eis ein Wasserfilm erzeugt, der durch Profilelementkanten, beispielsweise den Blockkanten bei Quernuten, zum Großteil weggewischt wird, sodass auch ein Großteil der Oberfläche der Profilpositive in direkten Reibkontakt mit dem Untergrund kommt. Das Volumen des wegzuwischenden Wasserfilms ist von diversen Faktoren abhängig, insbesondere den Umgebungstemperaturen, und zwar der Eistemperatur, der Reifentemperatur und der Lufttemperatur, sowie von der eingebrachten Reibenergie und ist bei Temperaturen um den Gefrierpunkt am größten. Die Einschnitte im Laufstreifen wirken auch als Wasser aufnehmende Taschen, es kann jedoch die dünne Wasserschicht am Rand der Einschnitte nur unzureichend ausgepresst werden, sodass zur Sicherstellung eines optimalen Reibkontaktes zwischen dem Laufstreifen und dem Untergrund möglichst viel des restlichen Wasserfilms von den Einschnitten aufgenommen werden sollte. Theoretisch könnte das Volumen der "Einschnitttaschen" durch eine dickere Ausführung der Einschnitte vergrößert werden, was jedoch mit dem Nachteil verbunden ist, dass die Kontaktfläche der Profilpositive des Laufstreifens zum Untergrund verringert wird, und dass die Profilelemente kleiner werden, daher mehr zum Kippen neigen und eine geringere Fläche für einen Reibkontakt zur Verfügung stellen.

Ein Fahrzeugluftreifen der eingangs genannten Art ist beispielsweise aus der DE 10 2012 104 403 A1 bekannt. An beiden Einschnittwänden sind Ausbuchtungen ausgebildet, wobei die Ausbuchtungen an der einen Einschnittwand an gegengleichen Positionen zu den Ausbuchtungen an der anderen Einschnittwand angeordnet sind. Die Ausbuchtungen liegen somit einander gegenüber, sind halbkugelförmig, zylinderförmig oder pyramidenförmig gestaltet und in axialen Reihen angeordnet. Der gegenseitige Abstand von zwei an einer Einschnittwand ausgebildeten, in axialer Richtung benachbarten Ausbuchtungen beträgt 2,0 mm bis 14,0 mm. Diese Ausbuchtungen vergrößern lokal das Leervolumen des Einschnittes, welches beim Schließen des Einschnittes vorhanden verbleibt, wodurch unter Anderem die Fahreigenschaften auf Schnee verbessert werden sollen.

Aus der JP 2005 329 793 A ist ein weiterer Fahrzeugluftreifen der eingangs genannten Art bekannt. An den Einschnittwänden ist eine Vielzahl von bei Sicht auf die Einschnittwand kreisförmigen Vertiefungen ausgebildet. Die Vertiefungen können auch direkt an der Laufstreifenperipherie, also an den Einschnittkanten, ausgebildet sein und sollen die Stabilität der Profilblöcke zur Verbesserung der Bremseigenschaften erhöhen.

Aus der DE 1 920 216 A1 ist ein weiterer Fahrzeugluftreifen der eingangs genannten Art bekannt. Die Einschnitte im Laufstreifen dieses bekannten Reifens setzen sich aus drei zickzackförmig verlaufenden Abschnitten zusammen, wobei die Einschnitte zur Erhöhung der Wasseraufnahmekapazität in ihren einzelnen Abschnitten mit unterschiedlich positionierten Erweiterungen versehen sind. Bei einem der Einschnittabschnitte ist der innerste Teil erweitert, beim zweiten Einschnittabschnitt der mittlere Teil des Einschnittes und beim dritten Einschnittabschnitt der unmittelbar an die Laufstreifenoberfläche anschließende Teil des Einschnittes. Die unterschiedlichen Positionen der Erweiterungen haben einen geringen Effekt auf die Größe der Kontaktfläche der Profilblockelemente zum Untergrund und daher auf den Reibwert und bewirken ein ungleichförmiges Abriebbild, was zur Folge hat, dass mit zunehmendem Abrieb die Wasseraufnahmekapazität des Einschnittes geringer wird.

Der Erfindung liegt die Aufgabe zugrunde, bei einem Reifen der eingangs genannten Art in Einschnitten die Wasseraufnahmekapazität ohne die Nachteile der bekannten Ausführung zu erhöhen.

Gelöst wird die gestellte Aufgabe erfindungsgemäß dadurch, dass die Vertiefung als lokale, in axialer Richtung orientierte Vertiefung ausgebildet ist, welche sich radial innerhalb einer Tiefe von 50 % der Profiltiefe befindet und randseitig von mindestens 2 mm Einschnittwand umlaufen ist.

Gemäß der Erfindung ist daher das durch die Vertiefung in zumindest einer der Einschnittwände gebildete Wasserreservoir, in radialer Richtung betrachtet, relativ weit innen positioniert und in die Einschnittwand eingebettet. Erfindungsgemäß ausgeführte Einschnitte sind daher in der Lage, eine gewisse Wassermenge aufzunehmen, wobei die Kontaktfläche der Profilelemente, die an die Einschnitte anschließen, und somit der Reibwert erhöht werden.

Bei einer bevorzugten Ausführungsform der Erfindung ist in der Einschnittwand zwischen der Vertiefung und der Laufstreifenaußenseite zumindest ein in radialer Richtung verlaufender Verbindungskanal ausgebildet. Verbindungskanäle unterstützen die Wasseraufnahme in der Vertiefung im Einschnittinneren und sind vor allem auch bei weichen Gummimischungen vorteilhaft, da sie bei einem etwaigen Schließen des Einschnittes unter größerer Verformung der Profilelemente des Profilpositivs ein Fließen von Wasser in das im Inneren des Einschnittes durch die Vertiefung vorhandene Wasserreservoir gewährleisten.

Innerhalb eines Einschnittes sollten sämtliche vorhandene Vertiefungen und Verbindungskanäle in Summe ein Volumen aufweisen, welches zwischen 5 % und 20 % des sonstigen Einschnittvolumens beträgt, sodass der Einschnitt über ein gutes Wasseraufnahmevermögen verfügt.

Jede Vertiefung und jeder Verbindungskanal sollte gegenüber dem Niveau der Einschnittwand eine maximale Tiefe aufweisen, die das 1,5-Fache der Einschnittbreite nicht übersteigt. Diese Maßnahme ist aus Stabilitätsgründen - die Umfangs- und die Quersteifigkeit der Profilpositive sollten so wenig als möglich beeinflusst werden - von Vorteil.

Bei härteren Gummimischungen können die Verbindungskanäle derart ausgeführt werden, dass ihre Breite und Tiefe über ihre Erstreckung konstant ist. Insbesondere bei weicheren Gummimischungen ist es vorteilhaft, wenn die Breite und die Tiefe des zumindest einen Verbindungskanals über seine Erstreckung in Richtung Laufstreifenaußenseite, insbesondere kontinuierlich, größer werden.

Weitere Merkmale, Vorteile und Einzelheiten der Erfindung werden nun anhand der Zeichnung, die schematisch Ausführungsbeispiele darstellt, näher beschrieben. Dabei zeigen
Fig. 1 eine Ansicht von Profilblöcken eines Laufstreifens eines Fahrzeugluftreifens,
Fig. 2a bis 2c, Fig. 3a bis 3c, Fig. 4a bis 4c und Fig. 5a bis 5c unterschiedliche Ausführungsvarianten der Erfindung, Fig. 2a bis 5a Ansichten von Einschnittwänden, Fig. 2b bis 5b radial mittige Schnitte durch den Einschnitt, Fig. 2c bis 5c Draufsichten des Einschnittes,
Fig. 6 und Fig. 7 Schnittdarstellungen von Profilblockelementen unter Belastung, Fig. 6 solche aus einer harten Laufstreifenmischung und Fig. 7 solche aus einer weichen Laufstreifenmischung.

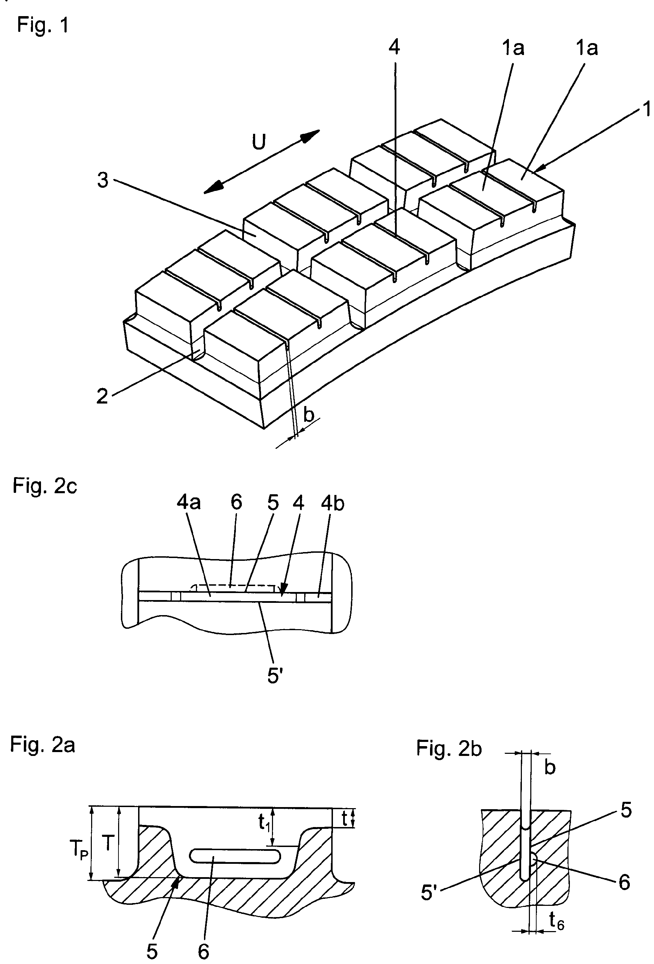

Fig. 1 zeigt beispielhaft Profilblöcke 1 eines Laufstreifens eines Fahrzeugluftreifens, insbesondere eines für den Einsatz unter winterlichen Fahrbedingungen geeigneten Reifens für Personenkraftwagen, Vans oder Schwerlastfahrzeuge. Die drei schematisch dargestellten Profilblöcke 1 gehören jeweils zu einer in Umfangsrichtung, welche durch den Doppelpfeil U angedeutet ist, verlaufenden Blockreihe, wobei die beiden Blockreihen durch eine Umfangsnut 2 voneinander getrennt sind und jeweils von weiteren, näher nicht bezeichneten Umfangsnuten begrenzt sind. Innerhalb einer Blockreihe sind die Profilblöcke 1 voneinander durch Quernuten 3 getrennt. Jeder Profilblock 1 ist mit einer Anzahl von Einschnitten 4 versehen, welche eine vorzugsweise konstante Breite b (Fig. 2b bis Fig. 5b) aufweisen, die zwischen 0,4 mm und 0,6 mm beträgt. Bei der dargestellten Ausführungsform sind pro Profilblock 1 zwei Einschnitte 4 vorgesehen, welche sich jeweils parallel zueinander und zu den Quernuten 3 erstrecken und deren gegenseitiger Abstand und deren Abstände zu den Quernuten 3 im Wesentlichen gleich groß sind. Die Einschnitte 4 gliedern die Profilböcke 1 in Profilblockelemente 1a und weisen bei der gezeigten Ausführungsform einen geraden Verlauf auf.

Fig. 2a zeigt einen entlang eines Einschnittes 4 aufgeschnittenen Profilblock 1 und daher eine Ansicht auf die eine, den Einschnitt 4 begrenzende Einschnittwand 5. Bei sämtlichen nachfolgend näher beschriebenen Ausführungsformen der Erfindung weisen die Einschnitte 4 jeweils einen mittleren, insbesondere über mindestens 50 % der Einschnittlänge verlaufenden Abschnitt 4a (Fig. 2c) auf, in welchem der Einschnitt 4 bis in eine Tiefe T reicht, die mindestens 70 % der Profiltiefe Tₚ, die der Tiefe der breiten Umfangsnuten 2 entspricht und bei PKW- und Van-Reifen in der Größenordnung von 7 mm bis 8 mm beträgt. An den mittleren Einschnittabschnitt 4a schließen Randabschnitte 4b an, welche eine geringere Tiefe t aufweisen, welche zwischen 30 % und 70 % der Tiefe T beträgt. Die Übergänge zwischen dem mittleren Einschnittabschnitt 4a und den beiden Randabschnitten 4b sind, wie dargestellt, in an sich bekannter Weise gerundet ausgeführt. Die Einschnittwand 5 weist eine lokale, in axialer Richtung orientierte Vertiefung 6 auf, welche radial innerhalb einer Tiefe t₁ ausgebildet ist, die 50 % der Tiefe Tₚ beträgt. Die radiale und die axiale Erstreckung der Vertiefung 6 werden derart gewählt, dass sowohl zum Einschnittgrund als auch zu den seitlichen Flanken des mittleren Einschnittabschnittes 4a ein Minimalabstand von 2 mm verbleibt. Wie Fig. 2b zeigt, weist die Vertiefung 6 eine Tiefe t₆ auf, welche höchstens das 1,5-Fache der Breite b beträgt. Das Volumen der Vertiefung 6 beträgt zwischen 5 % und 20 % des Einschnittvolumens bei unbelastetem Reifen. Das Einschnittvolumen ist das vom Raum zwischen den beiden Einschnittwänden ohne Berücksichtigung der Vertiefung 6 eingenommene Volumen, bei strukturierten Einschnittwänden wird zur Berechnung des Volumens die Struktur gedanklich als die Vertiefung abdeckend fortgesetzt. Die der Einschnittwand 5 gegenüberliegende Einschnittwand 5' weist bei dieser gezeigten Ausführungsform keine Vertiefung auf und ist als glatte, ebene und in radialer Richtung verlaufende Fläche ausgeführt.

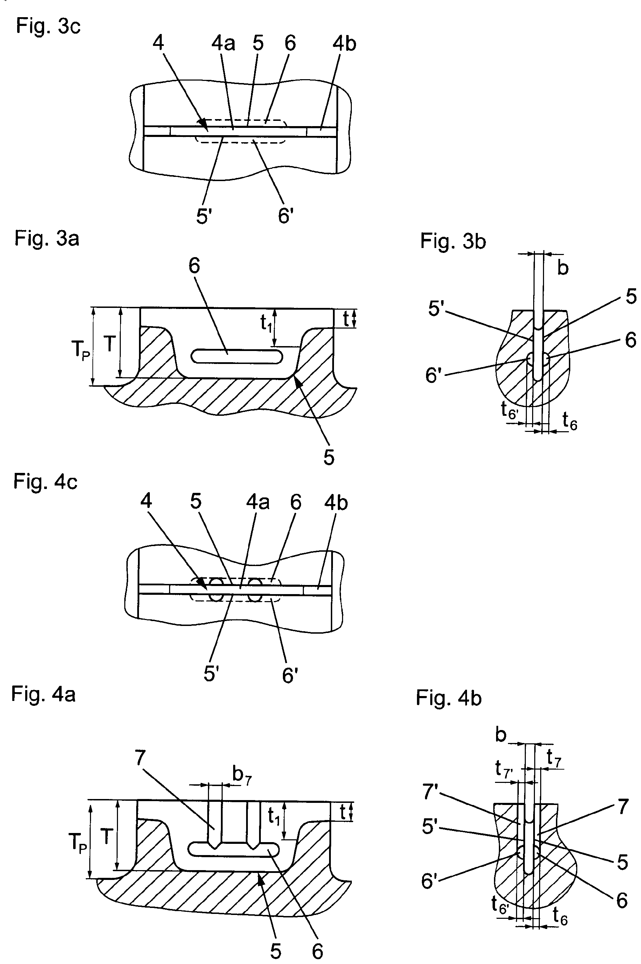

Die Figuren 3a bis 3c zeigen eine weitere Ausführungsvariante der Erfindung. Sowohl die Einschnittwand 5 als auch die Einschnittwand 5' des Einschnittes 4 sind bei dieser Ausführungsform im mittleren Einschnittabschnitt 4a mit je einer Vertiefung 6, 6' versehen, die einander exakt gegenüber liegen und übereinstimmend ausgeführt sind. Jede Vertiefung 6, 6' weist eine Tiefe t6, t_{6'} auf, die jeweils maximal das 1,5-Fache der Einschnittbreite b beträgt. Die in den Figuren 3a bis 3c dargestellte Ausführungsform unterscheidet sich daher von jener gemäß Fig. 2a bis 2c dadurch, dass in beiden Einschnittwänden 5, 5' eine Vertiefung 6, 6' ausgebildet ist, deren Volumen in Summe zwischen 5 % und 20 % des Einschnittvolumens beträgt.

Bei der in den Figuren 4a bis 4c gezeigten Ausführungsform ist ebenfalls in jeder Einschnittwand 5, 5' eine Vertiefung 6, 6', wie oben beschrieben, ausgebildet. Die Ausführung des Einschnittes 4 sowie die Ausführung der Vertiefungen 6, 6' entspricht jenen der bereits beschriebenen Ausführungsformen. Zusätzlich ist jede Vertiefung 6, 6' mittels zumindest eines in radialer Richtung verlaufenden Verbindungskanals 7, 7' mit der Laufstreifenaußenfläche in Verbindung. Bei der dargestellten Ausführungsform sind pro Einschnittwand 5, 5' zwei Verbindungskanäle 7, 7' nahe der seitlichen Endabschnitte der Vertiefungen 6, 6' beginnend angeordnet. Jeder Verbindungskanal 7, 7' weist eine Tiefe t₇, t_{7'} auf, die maximal der Tiefe t₆, t_{6'} der Vertiefungen 6, 6' entspricht und insbesondere über ihre Erstreckung in radialer Richtung konstant ist. Wie die Draufsicht auf den Einschnitt 4 in Fig. 4c zeigt, weisen die Verbindungskanäle 7, 7' einen gerundeten, beispielsweise halbkreisförmig gerundeten, Querschnitt auf. Die Breite b₇, b_{7'} der Verbindungskanäle 7, 7' beträgt in der Größenordnung von 1,0 mm bis 2,0 mm, wobei die Verbindungskanäle 7 den Verbindungskanälen 7' gegenüber liegen.

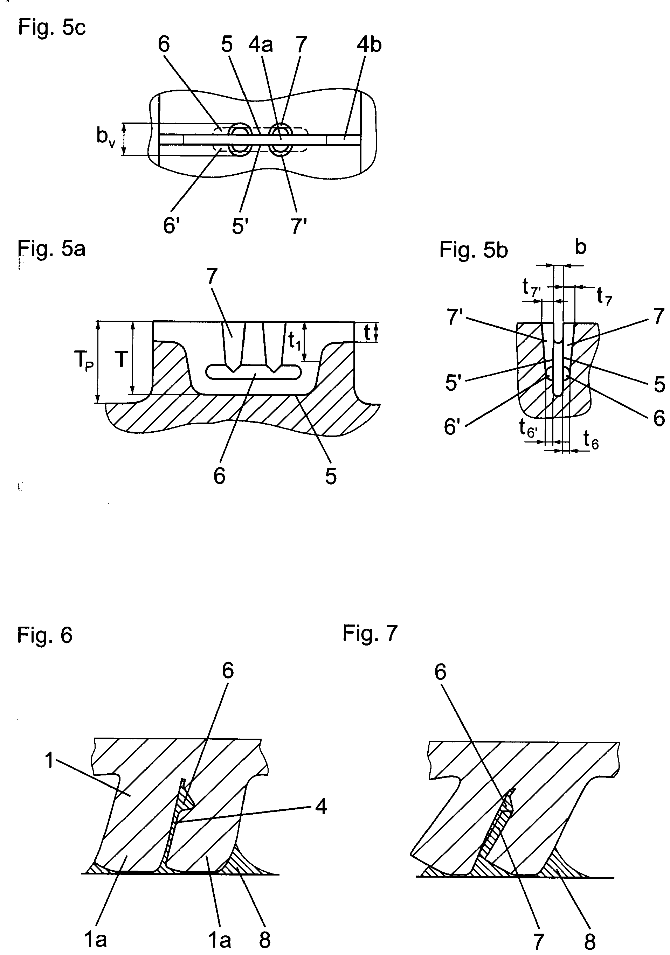

Die Figuren 5a bis 5c zeigen eine weitere Ausführungsform der Erfindung, welche eine Variante der in den Figuren 4a bis 4c dargestellten Ausführungsform ist. Anordnung und Ausführung der Vertiefungen 6, 6' in den Einschnittwänden 5, 5' sind daher analog zur Anordnung und Ausführung gemäß den Figuren 4a bis 4c. Lediglich die Verbindungskanäle 7, 7' werden in Richtung Laufstreifenprofilaußenseite kontinuierlich breiter und gleichzeitig kontinuierlich tiefer. An ihren Mündungsstellen in die Vertiefungen 6, 6' entspricht die Tiefe der Verbindungskanäle 7, 7' der Tiefe der Vertiefungen 6, 6', an ihren Mündungsstellen an der Laufstreifenaußenseite weisen die Verbindungskanäle 7, 7' nicht nur eine größere Breite auf als an ihren Mündungsstellen in die Vertiefungen 6, 6', sondern auch eine größere Tiefe. Die Ausführung wird derart getroffen, dass die maximale Breite bᵥ des Einschnittes 4 im Bereich der Verbindungskanäle 7, 7' bis zum Dreifachen der Einschnittbreite b entspricht und dass das in Summe von den Verbindungskanälen 7, 7' und den Vertiefungen 6, 6' eingenommene Volumen maximal 20 % des Einschnittvolumens beträgt.

Bei einer weiteren, nicht gezeigten Ausführungsform der Erfindung können mehr als zwei Verbindungskanäle, insbesondere bis zu vier Verbindungskanäle, pro Einschnittwand vorgesehen werden. Dabei sind auch Ausführungen möglich, bei denen in nur einer der Einschnittwände Verbindungskanäle ausgebildet sind. Die Verbindungskanäle in den Einschnittwänden können sich in ihren Abmessungen voneinander unterscheiden. Vorzugsweise liegen die Verbindungskanäle, die in der einen Einschnittwand ausgebildet sind, den Verbindungskanälen, die in der zweiten Einschnittwand ausgebildet sind, gegenüber.

Die Figuren 6 und 7 zeigen die Wirkung der Erfindung bei einem Reifen mit einem Laufstreifen aus einer etwas härteren Gummimischung und bei einem Reifen mit einem Laufstreifen aus einer weicheren Gummimischung, wie sie beispielsweise bei Laufstreifen von Winterreifen üblich ist. Werden Reifen bei winterlichen Straßenverhältnissen, insbesondere auf Eis, eingesetzt, so wird durch die Reibenergie zwischen der Eisschicht und dem Reifen ein Wasserfilm erzeugt, der durch die Profilelementquerkanten zum Großteil weggewischt wird, sodass zumindest ein Teil des nachfolgenden Profilelementes in direkten Reibkontakt mit dem eisigen Untergrund kommt. Ein Teil der gebildeten Wasserschicht kann nicht verdrängt werden und sollte daher möglichst von den Einschnitten 4 aufgenommen werden. Bei erfindungsgemäß ausgeführten Einschnitten 4 mit Vertiefungen 6, 6', die ein zusätzliches Reservoir zu Aufnahme von Wasser zur Verfügung stellen, kann eine wesentlich höhere Wassermenge in den Einschnitten 4 aufgenommen werden als bei in üblicher Weise ausgeführten Einschnitten. Dadurch wird ein höherer Reibwert der dem Einschnitt 4 benachbarten Profilblockelemente 1a auf eisigen Fahrbahnen, insbesondere bei Temperaturen nahe oder knapp über dem Gefrierpunkt, erreicht. Fig. 6 zeigt einen Profilblock 1 mit einem erfindungsgemäßen Einschnitt 4 mit einer Vertiefung 6 und zwei Profilblockelementen 1a, wie sie beispielsweise bei Traktion oder beim Bremsen verkippt werden, ferner den sich bildenden Wasserfilm 8 sowie das im Einschnitt 4 aufgenommene Wasser. Durch die Aufnahme des Wassers wird gegenüber Einschnitten, die keine Möglichkeit der vergrößerten Wasseraufnahme aufweisen, eine größere Kontaktfläche der Profilblockelemente 1a zum Untergrund zur Verfügung gestellt. Fig. 7 zeigt die Verformung von Profilblockelementen 1a eines Profilblockes 1 aus einer weichen Gummimischung, mit einem Einschnitt 4 mit einer Vertiefung 6 und einem Verbindungskanal 7. Gerade bei einer weichen Gummimischung ist es günstig, wenn zumindest ein Verbindungskanal 7 vorgesehen ist, der bei einem etwaigen "Schließen" des Einschnittes 4 unter größerer Verformung der Profilelemente 1a ein Fließen von Wasser in das im Inneren des Einschnittes 4 vorhandene "Wasserreservoir" gewährleistet.

Die Erfindung ist auch bei Einschnitten anwendbar, die, abweichend von den dargestellten Ausführungsformen, keinen geraden Verlauf aufweisen, sondern beispielsweise wellen- oder zickzackförmig verlaufen und entsprechend gestaltete Einschnittwände aufweisen. Mit erfindungsgemäß ausgeführten Einschnitten versehene Profilpositive können auch Profilbänder sein. Die Erfindung lässt sich ferner auch in Laufstreifen von Ganzjahresreifen verwenden.

### Bezugsziffernliste

1............................Profilblock
1a..........................Profilblockelement
2............................Umfangsnut
3............................Quernut
4............................Einschnitt
4a..........................mittlerer Abschnitt
4b..........................Randabschnitt
5, 5'.......................Einschnittwand
6, 6'.......................Vertiefung
7, 7'Verbindungskanal
8............................Wasserfilm
b, bᵥ, b₇, b_{7'}............Breite
T............................Tiefe
Tₚ..........................Profiltiefe
t, t₆, t_{6'}, t₇, t_{7'}.........Tiefe

## Patentansprüche

1. Fahrzeugluftreifen, insbesondere für einen Einsatz unter winterlichen Fahrbedingungen, mit einem Laufstreifen mit durch in Umfangsrichtung umlaufende Nuten (2), durch Quernuten (3) und dergleichen voneinander getrennten Profilpositiven, beispielsweise Profilblöcken (1) oder Laufstreifenbändern, in welchen im Wesentlichen in axialer Richtung verlaufende, die Profilpositive durchquerende, von zwei Einschnittwänden (5, 5') begrenzte Einschnitte (4) geringer Breite (b) ausgebildet sind, welche Einschnitte (4) jeweils eine Tiefe von mindestens 70 % der Profiltiefe (Tₚ) aufweisen, wobei im Einschnittinneren zumindest eine der Einschnittwände (5, 5') eine Vertiefung (6, 6') aufweist, welche das Wasseraufnahmevermögen des Einschnittes (4) erhöht,
**dadurch gekennzeichnet,**
**dass** die Vertiefung (6, 6') als lokale, in axialer Richtung orientierte Vertiefung ausgebildet ist, welche sich radial innerhalb einer Tiefe von 50 % der Profiltiefe (Tₚ) befindet und randseitig von mindestens 2 mm Einschnittwand (5, 5') umlaufen ist.

2. Fahrzeugluftreifen nach Anspruch 1, **dadurch gekennzeichnet, dass** in der Einschnittwand (5, 5') zwischen der Vertiefung (6, 6') und der Laufstreifenaußenseite zumindest ein in radialer Richtung verlaufender Verbindungskanal (7, 7') ausgebildet ist.

3. Fahrzeugluftreifen nach Anspruch 1 oder 2, **dadurch gekennzeichnet, dass** sämtliche Vertiefungen (6, 6') und Verbindungskanäle (7, 7') in Summe ein Volumen aufweisen, welches zwischen 5 % und 20 % des sonstigen Einschnittvolumens beträgt.

4. Fahrzeugluftreifen nach einem der Ansprüche 1 bis 3, **dadurch gekennzeichnet, dass** jede Vertiefung (6, 6') und jeder Verbindungskanal (7, 7') gegenüber dem Niveau der Einschnittwand eine maximale Tiefe (t₆, t_{6'}, t₇, t_{7'}) aufweist, die das 1,5-Fache der Einschnittbreite (b) beträgt.

5. Fahrzeugluftreifen nach einem der Ansprüche 2 bis 4, **dadurch gekennzeichnet, dass** die Breite und die Tiefe des zumindest einen Verbindungskanals (7, 7') über seine Erstreckung konstant sind.

6. Fahrzeugluftreifen nach einem der Ansprüche 2 bis 4, **dadurch gekennzeichnet, dass** die Breite und die Tiefe des zumindest einen Verbindungskanals (7, 7') über seine Erstreckung in Richtung Laufstreifenaußenseite, insbesondere kontinuierlich, größer werden.

## Claims

1. Vehicle pneumatic tire, in particular for use under winter driving conditions, having a tread with profile positives, for example profile blocks (1) or tread strips, which are separated from one another by grooves (2) that circulate in the circumferential direction, by transverse grooves (3) and the like, and in which sipes (4) with a small width (b) are formed, said sipes extending substantially in the axial direction, crossing through the profile positives, and being delimited by two sipe walls (5, 5'), each of which sipes (4) has a depth of at least 70% of the profile depth (Tₚ), wherein at least one of the sipe walls (5, 5') has a depression (6, 6') within the sipe, said depression increasing the water absorption capacity of the sipe (4),
**characterized**
**in that** the depression (6, 6') is formed as a local depression which is oriented in the axial direction and is located radially within a depth of 50% of the profile depth (Tₚ) and is encircled at the edges by at least 2 mm of the sipe wall (5, 5').

2. Vehicle pneumatic tire according to Claim 1, **characterized in that** at least one connecting channel (7, 7') extending in the radial direction is formed in the sipe wall (5, 5') between the depression (6, 6') and the outside of the tread.

3. Vehicle pneumatic tire according to Claim 1 or 2, **characterized in that** all the depressions (6, 6') and connecting channels (7, 7') taken together have a volume which is between 5% and 20% of the remaining sipe volume.

4. Vehicle pneumatic tire according to one of Claims 1 to 3, **characterized in that** each depression (6, 6') and each connecting channel (7, 7') has, with respect to the level of sipe wall, a maximum depth (t₆, t_{6'}, t₇, t_{7'}) which is 1.5 times the sipe width (b) .

5. Vehicle pneumatic tire according to one of Claims 2 to 4, **characterized in that** the width and the depth of the at least one connecting channel (7, 7') are constant over the extent thereof.

6. Vehicle pneumatic tire according to one of Claims 2 to 4, **characterized in that** the width and the depth of the at least one connecting channel (7, 7') increase, in particular continuously, over the extent thereof in the direction of the outside of the tread.

## Revendications

1. Pneumatique de véhicule, en particulier pour une utilisation dans des conditions de conduite hivernales, comprenant une bande de roulement avec des parties profilées positives, par exemple des blocs profilés (1) ou des rubans de bande de roulement, séparées les unes des autres par des rainures s'étendant dans la direction périphérique (2), des rainures transversales (3) et similaires, dans lesquelles sont réalisées des entailles (4) de plus faible largeur (b) s'étendant essentiellement dans la direction axiale, traversant les parties profilées positives, limitées par deux parois d'entailles (5, 5') lesquelles entailles (4) présentent à chaque fois une profondeur d'au moins 70 % de la profondeur du profilé (Tₚ), au moins l'une des parois d'entailles (5, 5') présentant à l'intérieur de l'entaille un renfoncement (6, 6') qui augmente la capacité de collecte d'eau de l'entaille (4),
**caractérisé en ce que**
le renfoncement (6, 6') est réalisé sous forme de renfoncement local, orienté dans la direction axiale, qui se trouve radialement à l'intérieur d'une profondeur de 50 % de la profondeur du profilé (Tₚ), et qui est entouré du côté du bord par une paroi d'entaille (5, 5') d'au moins 2 mm.

2. Pneumatique de véhicule selon la revendication 1, **caractérisé en ce qu'**au moins un canal de liaison (7, 7') s'étendant dans la direction radiale est réalisé dans la paroi d'entaille (5, 5') entre le renfoncement (6, 6') et le côté extérieur de la bande de roulement.

3. Pneumatique de véhicule selon la revendication 1 ou 2, **caractérisé en ce que** tous les renfoncements (6, 6') et les canaux de liaison (7, 7') présentent au total un volume qui représente entre 5 % et 20 % de l'autre volume d'entaille.

4. Pneumatique de véhicule selon l'une quelconque des revendications 1 à 3, **caractérisé en ce que** chaque renfoncement (6, 6') et chaque canal de liaison (7, 7') présente, par rapport au niveau de la paroi d'entaille, une profondeur maximale (t₆, t_{6'}, t₇, t_{7'}) qui représente 1,5 fois la largeur de l'entaille (b).

5. Pneumatique de véhicule selon l'une quelconque des revendications 2 à 4, **caractérisé en ce que** la largeur et la profondeur de l'au moins un canal de liaison (7, 7') sont constantes sur son étendue.

6. Pneumatique de véhicule selon l'une quelconque des revendications 2 à 4, **caractérisé en ce que** la largeur et la profondeur de l'au moins un canal de liaison (7, 7') augmentent, notamment de manière continue, sur son étendue dans la direction du côté extérieur de la bande de roulement.
